# EUROPEAN PATENT APPLICATION

(11) **EP 2 724 926 A1**
(43) Date of publication of application: **30.04.2014**
(21) Application number: 13190077.1
(22) Date of filing: 24.10.2013
(51) Int. Cl.: B62M 6/55, B62M 11/14

(54) **Central axle power output mechanism**

(30) Priority: 26.10.2012 TW 101220825
(71) Applicant: J.D Components Co., Ltd., Shou Shui Hsiang, Chang Hua Hsien (TW)
(72) Inventor: Hsu, Yuan-Fang, 300 Hsinchu City (TW)
(74) Representative: Becker Kurig Straus

(57) **Abstract**

The present invention provides a central axle power output mechanism comprising a spindle shaft(10), a motor(20), a sleeve(30), a first one-way bearing(40), a chainset(50) connected to the sleeve(30), a sun gear(60), a second one-way bearing(70), a plurality of planetary gears(80), a stationary ring gear(90) and a planetary supporting stand(100); wherein the spindle shaft(10) is used to transmit the manual pedaling power to the sleeve(30) via the first one-way bearing(40) and is connected to the chainset(50) thereon; the motor(20) power is outputted to the sleeve(30) via the sun gear(60), the planetary gears(80) and the planetary supporting stand(100) sequentially and is connected to the chainset(50) thereon such that the manual pedaling power and the motor(20) power are not interfered with each other.

## Description

### BACKGROUND OF THE INVENTION

1. Technical Field

The present invention is related to a bicycle power output mechanism, in particular, to a bicycle central axle power output mechanism.

2. Description of Related Art

Some of electrical power-assisted bicycles are provided with a power output mechanism at the central axle in order to allow the bicycle to be further driven by the motor power in addition to the manual pedaling for driving it forward.

To prevent the interferences between the manual pedaling power and the motor power, CN201161693Y discloses a "central axial type mid-mounted motor for electrical vehicle", which uses a rotor to drive a sun gear with a hollow axle when the motor outputs the power; wherein the sun gear drives a ring gear to rotate via a planetary gear ; during which a planetary supporting stand is stationary due to the one-way bearing such that the planetary gear outputs the power to an active sprocket wheel .

However, in the design of CN201161693Y, the speed reduction between the rotor and the ring gear is relatively smaller, which is not suitable for situations where high torque is required in such as hill climbing and starting up; alternatively, it may require additional equipment of other speed reduction mechanism to be installed in order to increase the torque.

### BRIEF SUMMARY OF THE INVENTION

In view of the above, a primary objective of the present invention is to provide a central axle power output mechanism in which the manual pedaling power and the motor power are not interfered with each other, and it provides a greater speed reduction ratio.

To achieve the aforementioned objective and others, the present invention provides a central axle power output mechanism comprising a spindle shaft, a motor, a sleeve, a first one-way bearing, a chainset, a sun gear, a second one-way bearing, a plurality of planetary gears, a stationary ring gear and a planetary supporting stand. The spindle shaft is provided to be driven by a manual pedaling power transmitted by a pair of cranks to rotate. The motor includes a rotor to be driven by an electrical power to rotate. The sleeve is arranged coaxially with the spindle shaft. The first one-way bearing is provided between the spindle shaft and the sleeve to allow the spindle shaft to drive the sleeve to rotate altogether in an opposite rotational direction only. The chainset is arranged coaxially with and provided to synchronously rotate with the sleeve. Furthermore, the sun gear is arranged coaxially with the rotor and includes a plurality of sun teeth. the second one-way bearing is provided between the rotor and the sun gear to allow the rotor to drive the sun gear to rotate altogether in an opposite rotational direction only. The plurality of planetary gears are provided at a circumference of the sun gear and include a plurality of planetary teeth engaged with the plurality of sun teeth. The ring gear is arranged coaxially with the spindle shaft and includes a plurality of inner teeth engaged with the plurality of planetary teeth. The planetary supporting stand is arranged coaxially with and provided to synchronously rotate with the sleeve, and the planetary supporting stand is connected to the plurality of planetary gears such that the planetary supporting stand is rotated altogether with the plurality of planetary gears around the sun gear.

According to the aforementioned design, in the central axle power output mechanism of the present invention, the manual pedaling power and the motor power are not interfered with each other; in addition, the present invention is to make the ring gear stationary while using the planetary supporting stand for output such that the speed reduction ratio of the planetary gears are increased and the torque outputted by the motor power is increased to benefit situations where high torque output is required.

### BRIEF DESCRIPTION OF THE SEVERAL VIEWS OF THE DRAWINGS

FIG. 1 is a perspective view of a preferred embodiment of the present invention.

FIG. 2 is an exploded view of a preferred embodiment of the present invention.

FIG. 3 is a cross-sectional view of a preferred embodiment of the present invention.

### DETAILED DESCRIPTION OF THE INVENTION

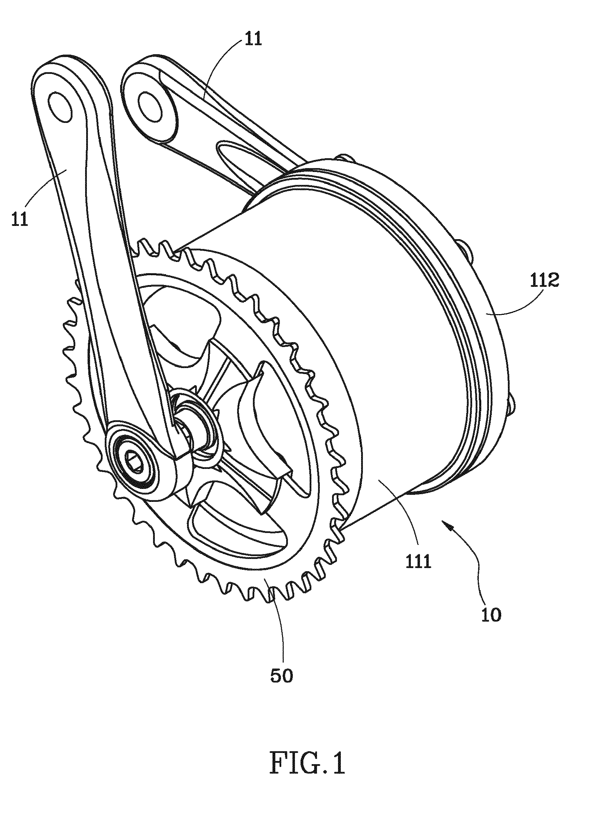

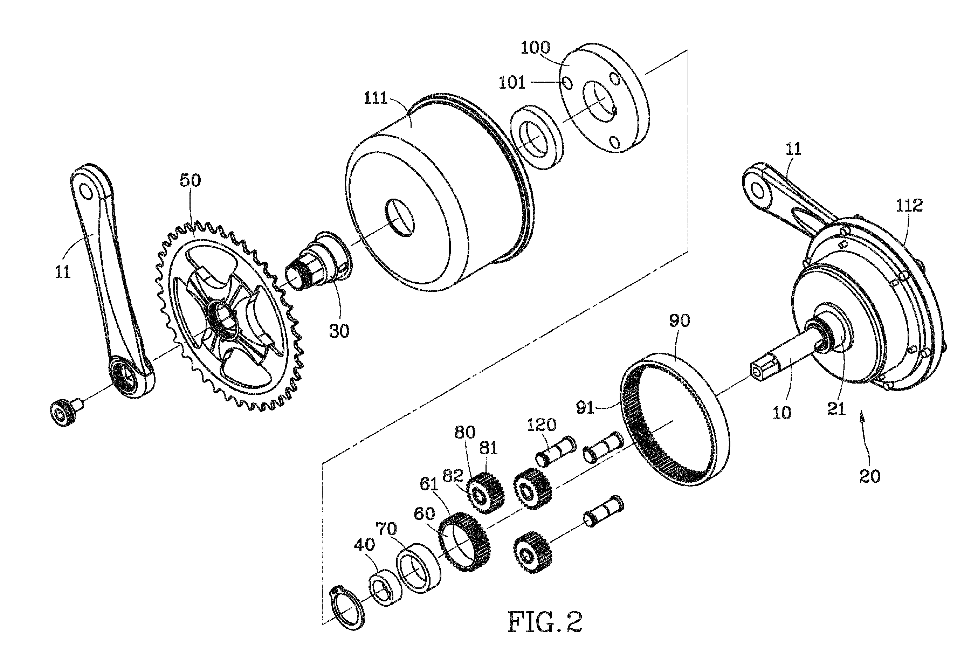

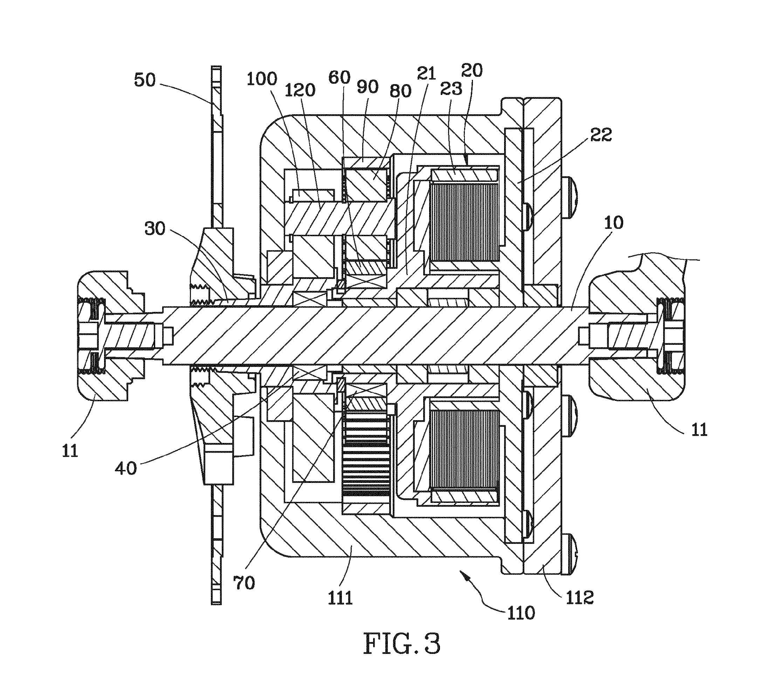

As shown in FIGs 1 to 3, in a preferred embodiment of the present invention, a central axle power output mechanism comprises a spindle shaft 10, a motor 20, a sleeve 30, a first one-way bearing 40, a chainset 50, a sun gear 60, a second one-way bearing 70, a plurality of planetary gears 80, a stationary ring gear 90, a planetary supporting stand 100 and a housing 110 formed by a front housing 111 and a rear housing 112 attached to each other; wherein the spindle shaft 10 is inserted through the housing 110, and the motor 20, the sleeve 30, the first one-way bearing 40, the sun gear 60, the second one-way bearing 70, the planetary gears 80, the ring gear 90 and the planetary supporting stand 100 are all received inside the housing 110 with the chainset 50 exposed to the outside.

The spindle shaft 10 is provided to be driven by a manual pedaling power transmitted by a pair of cranks 11 to rotate. The motor 20 includes a stator 22 and a rotor 21 to be driven by an electrical power to rotate; the rotor is provided with a magnet 23 thereon and the motor 20 is mounted onto the spindle shaft 10.

The sleeve 30 is arranged coaxially with the spindle shaft 10; the first one-way bearing 40 is provided between the spindle shaft 10 and the sleeve 30 to allow the spindle shaft 10 to drive the sleeve 30 to rotate altogether in an opposite rotational direction (such as an opposite clockwise rotation) only; the chainset 50 is arranged coaxially with and provided to synchronously rotate with the sleeve 30; in other words, when the sleeve 30 is rotated, the chainset 50 is rotated altogether.

The sun gear 60 is arranged coaxially with the rotor 21 and includes a plurality of sun teeth 61; the second one-way bearing 70 is provided between the rotor 21 and the sun gear 60 to allow the rotor 21 to drive the sun gear 60 to rotate altogether in an opposite rotational direction (such as an opposite clockwise rotation) only; wherein the first and second one-way bearings 40, 70 are provided with a plurality detention pieces thereon respectively in order to achieve the objective of the one-way transmission.

The plurality of planetary gears 80 are provided at a circumference of the sun gear 60 and include a plurality of planetary teeth 81 engaged with the plurality of sun teeth 61; and each one of the plurality of planetary gears 80 includes a planetary pin-hole 82 arranged at a center thereof.

The ring gear 90 is arranged coaxially with the spindle shaft 10 and includes a plurality of inner teeth 91 engaged with the plurality of planetary teeth 81. In other possible embodiments of the present invention, the ring gear 90 can be integrally formed on the front housing 111.

The planetary supporting stand 100 is arranged coaxially with and provided to synchronously rotate with the sleeve 30; and the planetary supporting stand 100 is connected to the plurality of planetary gears 80; for example, the planetary supporting stand 100 can include a plurality of stand pin-holes 101 corresponding to the plurality of planetary gears 80; and by penetrating a plurality of transmission pins 120 through the plurality of planetary pin-holes 82 and the stand pin-holes 101, the planetary supporting stand 110 is connected to the plurality of planetary gears 80. In other possible embodiment 100 of the present invention, the planetary supporting stand 100 can be integrally formed with the sleeve 30 as one single piece.

With the aforementioned design, when the motor 20 performs the output, the rotor 21 is driven by the electricity and drives the sun gear 60 to rotate via the second one-way bearing 70; as the sun gear 60 rotates, the planetary gear 80 are driven to perform a self-rotation; since the ring gear 90 is stationary, the planetary supporting stand 100 can be driven by the planetary gear 80 to perform an orbital-rotation such that the power is outputted to the chainset 50 via the sleeve 30. Accordingly, at such time, if the spindle shaft 10 is stationary or is of a rotational speed smaller than that of the sleeve 30, the first one-way bearing 40 would come into effect to prevent the motor 20 to transmit power to the spindle shaft 10 and the cranks 11.

On the other hand, in the situation where the manual pedaling power is used as the primary output, the spindle shaft 10 would then rotate altogether with the cranks 11, and in the situation where the sleeve 30 is stationary or is of a rotational speed smaller than that of the spindle shaft 10, the spindle shaft 10 would drive the sleeve 30 to rotate via the first one-way bearing 40 in order to output the power to the chainset 50. Accordingly, at such time, the second one-way bearing 70 would come into effect to prevent the interference of having the manual pedaling power being transmitted to the motor 20. In other words, in the central axle power output mechanism of the present invention, the motor power and the manual pedaling power would not interfere with each other.

In comparison to the mechanism disclosed by the aforementioned CN201161693Y, the present invention allows the ring gear to be stationary to output the motor power from the planetary supporting stand instead; therefore, the speed reduction ratio of the planetary gears would be greater than that disclosed by CN201161693Y (assuming the two having an identical number of teeth on each gear), which means the present invention using the motor to output is able to obtain a greater torque. By comparison, it is more suitable to use in those situations requiring high torques output such as hill climbing and starting up such that diverse needs of users can be satisfied.

Last and not the least, it shall be noted that the structural components of the aforementioned embodiments of the present invention are provided as examples for illustration only, which shall not be treated as limitations to the scope of the present case; any other equivalent replacement or modification shall be deemed to be covered by the claims of the present case.

## Claims

1. A central axle power output mechanism, comprising:
a spindle shaft(10) provided to be driven by a manual pedaling power transmitted by a pair of cranks(11) to rotate;
a motor(20) having a rotor(21) to be driven by an electrical power to rotate;
a sleeve(30) arranged coaxially with the spindle shaft(10);
a first one-way bearing(40) provided between the spindle shaft(10) and the sleeve(30) to allow the spindle shaft(10) to drive the sleeve(30) to rotate altogether in an opposite rotational direction only;
a chainset(50) arranged coaxially with and provided to synchronously rotate with the sleeve(30);
a sun gear(60) arranged coaxially with the rotor(21), the sun gear(60) having a plurality of sun teeth(61);
a second one-way bearing(70) provided between the rotor(21) and the sun gear(60) to allow the rotor(21) to drive the sun gear(60) to rotate altogether in an opposite rotational direction only;
a plurality of planetary gears(80) provided at a circumference of the sun gear(60) and having a plurality of planetary teeth(81) engaged with the plurality of sun teeth(61);
a stationary ring gear(90) arranged coaxially with the spindle shaft(10), the ring gear(90) having a plurality of inner teeth(91) engaged with the plurality of planetary teeth(81); and
a planetary supporting stand(100) arranged coaxially with and provided to synchronously rotate with the sleeve(30), the planetary supporting stand(100) being connected to the plurality of planetary gears(80), and the planetary supporting stand(100) being rotated altogether with the plurality of planetary gears(80) around the sun gear(60).

2. The central axle power output mechanism according to Claim 1, wherein each one of the planetary gears(80) includes a planetary pin-hole(82), each one of the planetary supporting stands(100) includes a stand pin-hole(101) corresponding to the plurality of planetary gears(80), and by penetrating the plurality of transmission pins(120) through the plurality of planetary pin-holes(82) and the stand pin-holes(101), the planetary supporting stand(100) and the plurality of planetary gears(80) are connected with each other.
